(19) Europäisches Patentamt
European Patent Office
Office européen des brevets

(11) **EP 3 982 341 A1**

(12) **EUROPEAN PATENT APPLICATION**

(43) Date of publication:
**13.04.2022 Bulletin 2022/15**

(21) Application number: **21210254.5**

(22) Date of filing: **28.05.2020**

(51) International Patent Classification (IPC):
**G07D 7/12** (2016.01)          **G07D 7/1205** (2016.01)
**G07D 7/20** (2016.01)

(52) Cooperative Patent Classification (CPC):
**G07D 7/12; G01N 21/276; G01N 21/86;
G06V 10/141; G07D 7/1205; G07D 7/2008;**
G01N 2021/8663; G06V 10/242

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.05.2019 JP 2019101327
29.11.2019 JP 2019217410**

(62) Document number(s) of the earlier application(s) in
accordance with Art. 76 EPC:
**20176969.2 / 3 754 619**

(71) Applicants:
• **KABUSHIKI KAISHA TOSHIBA
Minato-ku
Tokyo
105-0023 (JP)**

• **Toshiba Infrastructure Systems &
Solutions Corporation
Kawasaki-shi, Kanagawa 212-0013 (JP)**

(72) Inventor: **KURE, Shota
Kawasaki-shi, Kanagawa, 212-0013 (JP)**

(74) Representative: **Horn Kleimann Waitzhofer
Patentanwälte PartG mbB
Ganghoferstrasse 29a
80339 München (DE)**

Remarks:
This application was filed on 24-11-2021 as a
divisional application to the application mentioned
under INID code 62.

(54) **FLUORESCENT IMAGE CALIBRATION METHOD**

(57) Disclosed is a fluorescent image calibration method comprising: transporting a proof sheet (70) coated with two or more fluorescent materials having different rise times of fluorescent emission, applying excitation light to the proof sheet (70), and obtaining (ST13) a proof sheet image signal corresponding to an image of the proof sheet (70); obtaining (ST14) proof sheet measurement data indicating emission light intensities of the two or more fluorescent materials from the proof sheet image signal; setting (ST15) a correction value to correct a paper sheet image signal corresponding to an image of a paper sheet, based on a relationship of paper sheet reference data, proof sheet reference data and the proof sheet measurement data, wherein the paper sheet reference data indicates a relationship between a rise time of each of the fluorescent materials of the paper sheet on which a fluorescent image is included and an emission light intensity, and the proof sheet reference data indicates a relationship between a rise time of each of the two or more fluorescent materials on the proof sheet (70) and the emission light intensity; obtaining an estimated excitation time for which the excitation light is being applied to the proof sheet (70), from the relationship between the proof sheet reference data and the proof sheet measurement data; and setting a correction value corresponding to the estimated excitation time, based on a correction value corresponding to an excitation time obtained from the paper sheet reference data.

F I G. 8

EP 3 982 341 A1

## Description

FIELD

Embodiments described herein relate generally to a fluorescent image calibration method.

BACKGROUND

A paper sheet processing device that includes a main body for counting and authenticating paper sheets such as securities and banknotes and performing a bundling process or shredding process based on the authentication result and a management terminal connected to the main body has been in practical use. The paper sheet processing device of this type is provided with an image reading device configured to acquire images of paper sheets. The image reading device performs imaging through a sensor on a paper sheet transported on a transport path, thereby reading an image of the paper sheet. In order to reliably read an image, a background plate is placed on the opposite side across the transport path with respect to the reading surface, and a reference color section (e.g., white section) is provided on the background plate at the paper sheet conveying position so that corrections can be made to the read-out image.

The information read from a paper sheet includes printing information of a fluorescent ink (hereinafter referred to as a "fluorescent image"). When reading this information, excitation light that causes the fluorescent ink to produce fluorescence is used for imaging, instead of the white light generally used for image reading. In relation to this, a reference member for making corrections to a read-out image has been suggested.

Furthermore, a correction method employing white light and a white background plate has been suggested for taking a fluorescent image that is not monochromatic information but is multicolor (e.g. three colors of RGB) information.

JP 2015-222463 A discloses a fluorescent light and phosphorescence detection device for detecting fluorescent light and phosphorescence of paper sheets transported in a transport path comprising: a light source for radiating ultraviolet light to the paper sheets; and two sensor units formed of an image sensor capable of imaging images of fluorescent light emission and phosphorescence emission excited on the paper sheets by the ultraviolet light, and a light reception lens for guiding the fluorescent light emission and phosphorescence emission excited on the paper sheets to the image sensor. The two sensor units are disposed so as to face vertically sandwiching the transport path, and positions of the light reception lens and image sensor in the vertical sensor units are disposed to be shifted to the transport direction of the paper sheets.

JP 2011-118457 A discloses an optical detection device including: a lighting means which emits excitation light to carried paper sheets; a fluorescence detection means which detects a fluorescence image from a predetermined detection range; a fluorescence reference plate provided within the detection range of the fluorescence detection means; an environmental temperature detection means which detects the environmental temperature in the vicinity of the carried paper sheets; and a medium temperature property storage means which associates and stores the environmental temperature and a medium temperature correction multiplier. The optical detection device performs: a first correction process to the fluorescence image detected from the paper sheets by the fluorescence means based on the fluorescence image detected from the fluorescence reference plate and a preset reference value; and a second correction process to the fluorescence image of the paper sheets corrected using the medium temperature correction multiplier stored in the medium temperature property storage means based on the environmental temperature detected by the environmental temperature detection means.

BRIEF DESCRIPTION OF THE DRAWINGS

A general architecture that implements the various features of the embodiments will now be described with reference to the drawings. The drawings and the associated descriptions are provided to illustrate the embodiments and not to limit the scope of the invention.

FIG. 1 is a diagram schematically showing an example of an image reading device according to the first embodiment.
FIG. 2 is a diagram explaining fluorescent emission by the light from a light source in a situation before a paper sheet is transported to the imaging range by the image reading device according to the first embodiment.
FIG. 3 is a diagram explaining fluorescent emission by the light from the light source in a situation after the paper sheet is transported to the imaging range by the image reading device according to the first embodiment.
FIG. 4 is a schematic diagram showing an exemplary relationship of the wavelength by the light from the light source, the sensitivity wavelength of the sensor, the emission wavelength of a fluorescence reference member, and the fluorescent emission wavelength of a paper sheet according to the first and second embodiments.
FIG. 5 is a diagram schematically showing an example of the arrangement of the fluorescence reference member and the transport path of the paper sheet in the image reading device according to the first and second embodiments.
FIG. 6 is a diagram showing an exemplary image read by the image reading device according to the first and second embodiments.
FIG. 7 is a flowchart showing an exemplary procedure for setting the correction of the sensitivity of the sensor in the image reading device according to the first embodiment.

FIG. 8 is a block diagram showing an exemplary configuration of the components of the image reading device according to the first embodiment.

FIG. 9 is a diagram showing a schematic configuration of a paper sheet processing device according to the first and second embodiments.

FIG. 10 is a diagram schematically showing an exemplary image reading device according to the second embodiment.

FIG. 11 is a diagram explaining fluorescent emission by light from the light source in a situation before a paper sheet is transported to the imaging range by the image reading device according to the second embodiment.

FIG. 12 is a diagram explaining fluorescent emission by the light from the light source in a situation after the paper sheet is transported to the imaging range by the image reading device according to the first embodiment.

FIG. 13 is a schematic diagram showing an exemplary relationship of the wavelength of the light from the light source and the sensitivity wavelength (monochrome) of the sensor in the image reading device according to the second embodiment.

FIG. 14 is a schematic diagram showing an exemplary relationship between the excitation light emission by the image reading device according to the second embodiment and the emission of the fluorescent material.

FIG. 15 is a schematic diagram showing an example of irradiation and an excitation zone in the image reading device according to the second embodiment.

FIG. 16 is a schematic diagram showing an exemplary imaging timing in the rise time of the fluorescent emission by the image reading device according to the second embodiment.

FIG. 17 is a diagram showing an exemplary proof sheet prepared by printing two fluorescent inks on one paper sheet.

FIG. 18 is a schematic diagram showing an exemplary relationship of the rise times of the fluorescent materials of the proof sheet measured by the image reading device according to the second embodiment, the imaging signals 1, and time T.

FIG. 19 is a schematic diagram showing an exemplary correction amount of a fluorescent image signal of an imaging target by the image reading device according to the second embodiment.

FIG. 20 is a block diagram showing an exemplary configuration of the components of the image reading device according to the second embodiment.

FIG. 21 is a flowchart showing an example of the setting of a correction value for the fluorescent image correction processing by the image reading device according to the second embodiment.

FIG. 22 is a flowchart showing an example of the fluorescent image correction processing and determination processing by the image reading device according to the second embodiment.

## DETAILED DESCRIPTION

According to a first embodiment not subject to the appended method claims, a paper sheet processing device comprises a fluorescence reference member, a light source, and a sensor. The fluorescence reference member is configured to demonstrate fluorescence in accordance with an intensity of excitation light applied. The light source configured to apply the excitation light to the fluorescence reference member and also apply the excitation light to a paper sheet being transported to a position facing the fluorescence reference member. The sensor configured to take, at a plurality of sensitivity wavelengths, an image of an irradiation surface of the fluorescence reference member being irradiated with the excitation light, and also take, at the sensitivity wavelengths, an image of an irradiation surface of the paper sheet being irradiated with the excitation light. The fluorescence reference member includes a transmittance control element for the excitation light, and a fluorescence emitting member configured to demonstrate fluorescence in accordance with the intensity of the excitation light, in the order of an irradiation direction of the excitation light.

The first embodiment will be described by referring to the drawings.

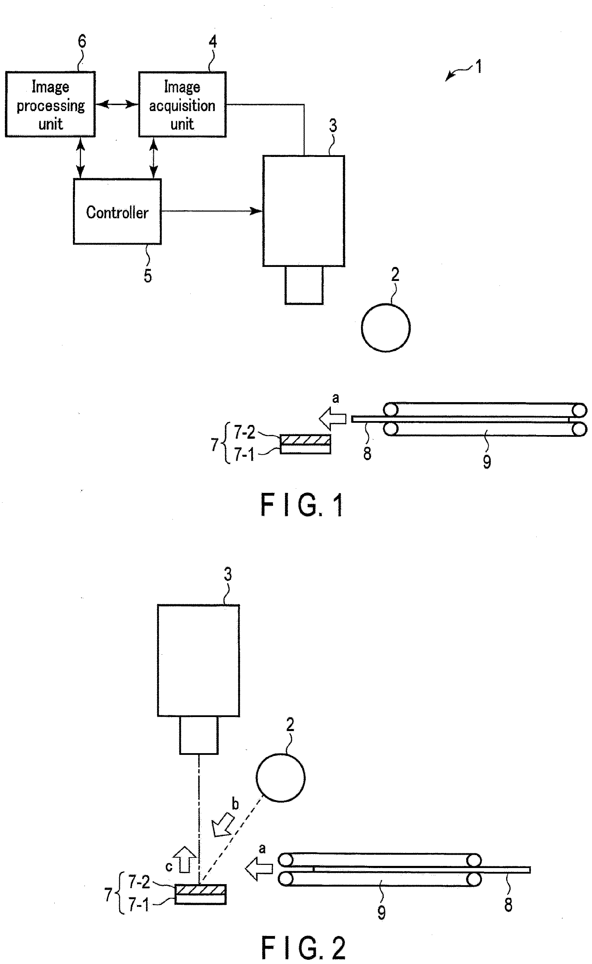

FIG. 1 is a schematic diagram of an exemplary image reading device according to the first embodiment. As illustrated in FIG. 1, an image reading device 1 includes a light source 2, a sensor 3, an image acquisition unit 4, a controller 5, an image processing unit 6, a fluorescent reference member 7, and a conveyor 9 that functions as a transporting means. The fluorescent reference member 7 includes a fluorescence producing member 7-1 and a transmittance control element 7-2. The conveyor 9 may be composed of a pair of upper and lower belts or a plurality of rollers, thereby transporting a paper sheet 8 in the direction indicated by arrow a in FIG. 1. The fluorescent reference member 7 may include a fluorescence producing member 7-1, prepared by coating the surface of a quartz glass panel with a fluorescent ink in such a manner as to demonstrate fluorescent emission of an intensity corresponding to the intensity of the excitation light applied, and a transmittance control element 7-2 (e.g. a combination of a variable neutral density (ND) filter that can change its transmittance level by level in accordance with a change of the angle, for example, and an actuator configured to change the transmittance of the variable ND).

The light source 2 may be an excitation light device adopting a xenon lamp, mercury lamp, metal halide lamp, light emitting diode (LED) or the like as a light source, and functions as excitation lighting that applies the excitation light to the fluorescent reference member 7. The fluorescent reference member 7 includes a transmittance control element 7-2 and a fluorescence producing member 7-1 arranged in the order of the excitation light application direction. The light source 2 also functions as an excitation light device configured to apply an excitation light to a paper sheet 8 that is being transported by the conveyor 9 to the position corresponding to the fluorescent reference member 7, so as to trigger the production (excitement) of the fluorescence by the coated fluorescent ink (fluorescent material). The excitation light emitted from the light source 2 to the fluorescent reference member 7 has the same intensity as the excitation light emitted to the paper sheet being transported to the corresponding position of the fluorescent reference member 7.

The sensor 3 may be composed of a line image sensor (e.g., a line charge coupled device (CCD) or a line complementary metal oxide semiconductor (CMOS) having a sensitivity wavelength corresponding to the red/green/blue (RGB) color information) for the purpose of linearly and sequentially performing imaging on the paper sheet 8 being transported. The line image sensor is provided with imaging elements (pixels) linearly arranged and configured to convert the received light to electric signals, or in other words, to an image. With these imaging elements, the sensor 3 performs imaging of the irradiation surface of the fluorescent reference member 7 that receives the applied excitation light using different sensitivity wavelengths. Furthermore, with these imaging elements, the sensor 3 sequentially performs imaging of a predetermined range (imaging range) in which the paper sheet 8 is being transported, thereby acquiring images. In other words, the sensor 3 having the imaging elements performs imaging on the irradiation surface of the paper sheet on which an excitation light is applied, using different sensitivity wavelengths.

The image acquisition unit 4 performs various processing including automatic gain control (AGC) correction and analog-to-digital (A/D) conversion on the images acquired by the sensor 3.

The controller 5 performs total control over the operations of the light source 2, sensor 3, image acquisition unit 4, image processing unit 6, and conveyor 9. The controller 5 includes a processor such as central processing unit (CPU), a memory that functions as a storage means, an interface and the like. The CPU is a processor that realizes various processing functions by the execution of a program. The CPU is connected to the components of the image reading device 1 by way of the interface or the like. The memory may be composed of a read-only memory (ROM), random-access memory (RAM) and non-volatile memory. The ROM is a non-transitory computer-readable storage medium storing a control program, control data and reference images for determination of a paper sheet. The RAM, which functions as a working memory, temporarily stores data that is being processed by the controller 5. The non-volatile memory is a non-transitory computer-readable storage medium, accumulating and storing images read from the paper sheet 8 processed by the device. The non-volatile memory may store a program for control.

The image processing unit 6 detects and corrects the position and skew of a paper sheet 8, calculates the image characteristic amount, and determines the type of the paper sheet 8, based on the image acquired by the sensor 3. The image processing unit 6 may function as a detection means for detecting the skew of the paper sheet 8. The configuration of the image acquisition unit 4, controller 5, and image processing unit 6 will be described later.

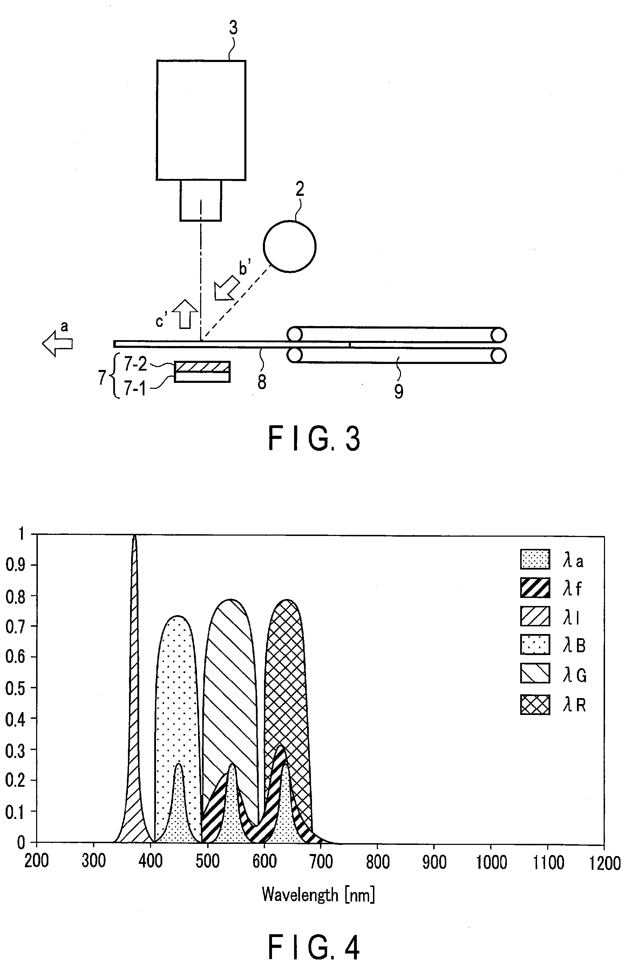

The flow of taking a fluorescent image will be explained with reference to FIGS. 2 and 3.

When the paper sheet 8 is not present in the imaging range, or in other words when the paper sheet 8 is not at a position facing the sensor 3 (position facing the fluorescent reference member 7), the light source 2 applies light b to the fluorescent reference member 7. The applied light b excites the fluorescent reference member 7, producing fluorescent emission c. The sensor 3 receives the fluorescent emission c produced in the imaging range. That is, the sensor 3 acquires an imaging signal corresponding to the fluorescent emission c.

Next, under the control of the controller 5, the conveyor 9 transports the paper sheet 8 toward the imaging range of the sensor 3. At the same time, the light source 2 applies light b' to the imaging range to which the paper sheet 8 is being transported. The applied light excites the fluorescent ink used for printing on the paper sheet 8, producing fluorescent emission c'. The sensor 3 receives the fluorescent emission c' produced in the imaging range. That is, the sensor 3 acquires an imaging signal corresponding to the fluorescent emission c'. In this manner, the image reading device 1 acquires a fluorescent image of the paper sheet 8.

The fluorescent emission c provides information indicating the state of lighting output immediately before the passage of the paper sheet 8 and the state of the camera sensitivity. By correcting the image based on the fluorescent emission c, an image of the paper sheet 8 can be acquired under stable conditions. In particular, the controller 5 corrects the sensitivity of the sensor 3 based on the imaging signal corresponding to the fluorescent emission c, and the sensitivity-corrected sensor 3 acquires an image of the paper sheet 8.

FIG. 4 is a schematic diagram showing an exemplary relationship of the irradiation wavelength $\lambda l$ of the light source 2, the sensitivity wavelengths (multiple sensitivity wavelengths) $\lambda R$, $\lambda G$ and $\lambda B$ of the sensor 3, the emission wavelength $\lambda a$ of the fluorescent reference member 7, and the fluorescent emission wavelength $\lambda f$ of the paper sheet 8. As indicated in FIG. 4, the irradiation wavelength $\lambda l$ may be ultraviolet radiation, which is out of the range of the visible radiation including the sensitivity wavelengths $\lambda R$, $\lambda G$ and $\lambda B$ of the sensor 3. The fluorescent emission wavelength λf of the paper sheet may be orange light. The sensor acquires the emission intensities of the sensitivity wavelengths λR, λG and λB, thereby acquiring the RGB color information of the three colors.

For the fluorescent reference member 7, three different fluorescent materials are selected and adopted so that the peaks of the emission wavelength λa of the fluorescent reference member 7 will fall within the respective ranges of the sensitivity wavelengths λR, λG and λB of the sensor 3. The emission wavelengths for the portion of the paper sheet 8 not configured to emit fluorescence can be determined as needed by selecting the optical filter and the materials.

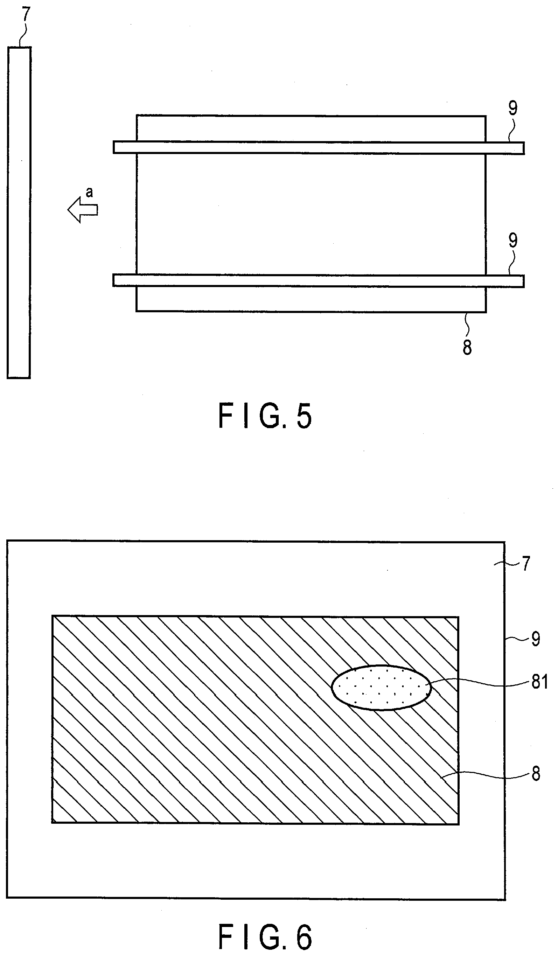

FIG. 5 is a schematic diagram showing an example of the arrangement of the fluorescent reference member 7 and transport path of the paper sheet 8. As illustrated in FIG. 5, the fluorescent reference member 7 is a rectangular strip. The fluorescent reference member 7 is provided at the position including the imaging range of the sensor 3, in such a manner as to cover the transport area of the paper sheet 8 in the direction perpendicular to the transport direction a of the paper sheet 8.

An exemplary image read by the image reading device 1 is illustrated in FIG. 6. In the example of FIG. 6, the illustrated image is not slid or skewed. The conveyor 9 in this example does not include the upper belt on the upper surface of the paper sheet 8 above the fluorescent reference member 7, and thus only supports the lower surface of the paper sheet 8 so that an image can be taken for the entire surface of the paper sheet. As illustrated in FIG. 6, when no paper sheet 8 is present on the fluorescent reference member 7, the fluorescent reference member 7 emits light so that the fluorescent emission of the fluorescent reference member 7 itself (hereinafter referred to as "brightness reference") can be read. During the passage of the paper sheet 8, no emission is observed from the fluorescent reference member 7, with the lighting obstructed by the paper sheet 8. Because the portion of the paper sheet 8 not printed with the fluorescent ink does not demonstrate fluorescence, the position of the paper sheet 8 passing is read as black. Only the portion of information 81 of the paper sheet 8 printed with the fluorescent ink demonstrates fluorescent emission, and is read by the sensor 3 as brightness information.

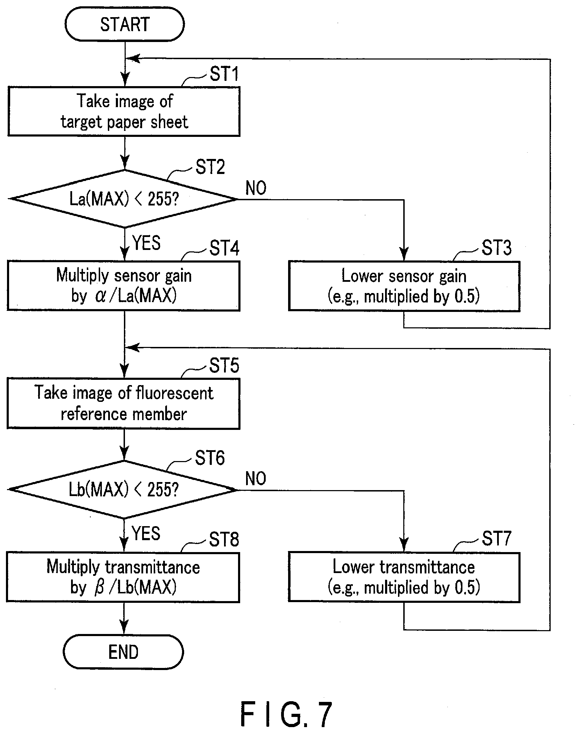

Next, the setting procedure for realizing the corrections is explained. FIG. 7 is a flowchart of an exemplary procedure for setting the sensor sensitivity of the image reading device according to the first embodiment. The controller 5 functions as a correction unit for controlling the setting of the correction of the sensor sensitivity in the image reading device 1.

First, the controller 5 initially controls the transporting operation of the conveyor 9 in a manner such that the conveyor 9 transports a paper sheet 8 that is subject to correction, and the sensor 3 takes an image of the paper sheet 8 being transported in the imaging area, thereby acquiring parameters for corrections (ST1). Here, the transmittance of the transmittance control element 7-2 is not regulated but set to 100%. The signal intensity La of the fluorescent image (brightness information) obtained by taking an image of the paper sheet 8 may represent 8-bit numerical data (256 levels from 0 to 255) for the intensity of each of the three color components of RGB. When it is determined that the signal intensity La exceeds the upper limit of the sensitivity range of the sensor 3 (i.e., the highest value of the RGB components (LaMAX) being close to but ambiguous around 255) (no at ST2), the controller 5 lowers the gain of the camera (e.g., multiplying the gain by 0.5) (ST3). The controller 5 controls the transporting operation of the conveyor 9 again so that the sensor 3 takes an image of the paper sheet transported by the conveyor 9. In this manner, the controller 5 adjusts the LaMAX to fall within the range of the sensor sensitivity.

Next, the controller 5 adjusts the gain so as to set the highest value (LaMAX) of the signal intensities La for the RGB components to a target value α (multiplying the gain by α/LaMAX) (ST4). In this manner, the controller 5 sets the sensitivity of the camera with which the fluorescence emitting portion of the paper sheet demonstrates a desired value.

Thereafter, under the control of the controller 5, the sensor 3 takes an image of the fluorescent reference member 7 (ST5). At this moment, the paper sheet need not be in transportation.

With regard to the signal intensity Lb of the fluorescent reference member, the transmittance of the transmittance control element 7-2 is adjusted in the same manner as the operation for the signal intensity La so that the LbMAX will fall within the range of the sensor sensitivity, and the signal of the fluorescent reference member will ultimately become a desired value β. That is, when it is determined that the signal intensity Lb exceeds the upper limit of the sensitivity range of the sensor 3 (the highest value (LbMAX) of the RGB components being close to but ambiguous around 255) (no at ST6), the controller 5 lowers the transmittance of the transmittance control element 7-2 (e.g., multiplying the gain by 0.5) (ST7). Then, the sensor 3 takes an image of the fluorescent reference member 7 again. In this manner, the controller 5 adjusts the LbMAX so as to fall within the range of the sensor sensitivity. The controller 5 controls the actuator included in the transmittance control element 7-2, changes level by level the transmittance of a variable ND filter that is also included in the transmittance control element 7-2, thereby adjusting the transmittance of the transmittance control element 7-2.

Next, the controller 5 adjusts the transmittance so as to set the highest value (LbMAX) of the signal intensities Lb of the RGB components to the target value β (ST8).

With the above operation, the brightness reference having an emission amount sufficient to produce the fluorescence from the paper sheet 8 can be acquired.

The operation may be established by loading, transporting and imaging a prescribed number of paper sheets so that the operation can be terminated when the processing of all the sheets is completed.

In the above operation, the maximum transmittance is set to 100%, and it is therefore preferable that Lb should take a value greater than La. That is, under the application of excitation light, the fluorescent reference member 7 preferably demonstrates the fluorescence of a higher intensity than the fluorescence from the paper sheet 8. For the preparation of the fluorescence producing member 7-1, the relationship of the amount of fluorescent material in the ink and the thickness of the ink with respect to the emission amount of a sample of the paper sheet should be examined in advance so that the conditions can be satisfied.

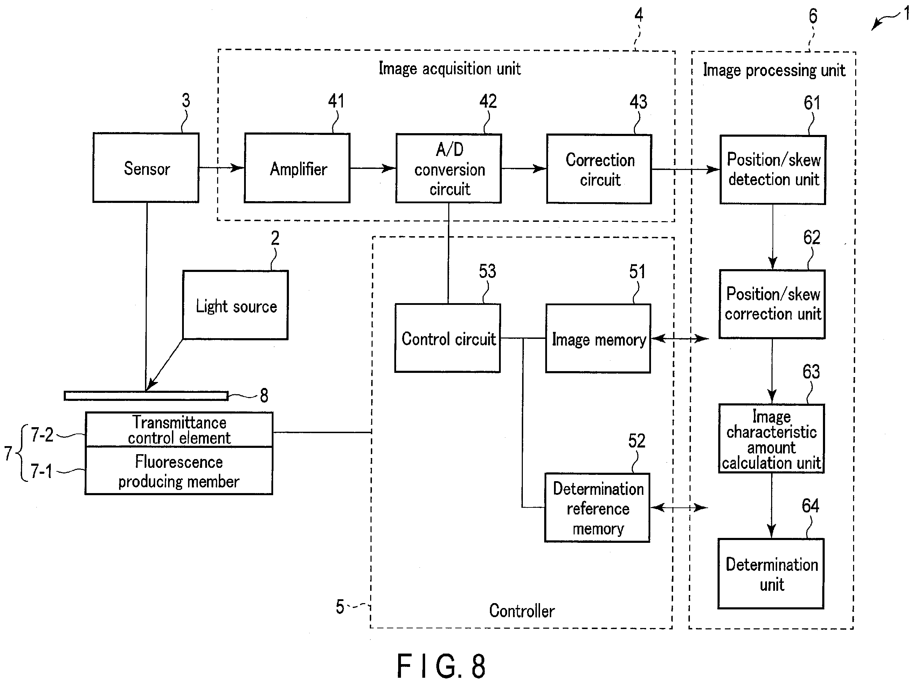

FIG. 8 is a block diagram of the components of the image reading device according to the first embodiment. The functions of the image acquisition unit 4, controller 5, and image processing unit 6 in FIG. 1 are illustrated as blocks. The illustration shows the structure after corrections are made in the sensor (camera).

As illustrated in FIG. 8, the image acquisition unit 4 includes an amplifier 41, analog/digital conversion circuit (hereinafter, "A/D conversion circuit") 42, and correction circuit 43.

The amplifier 41 amplifies an input signal (image) from the sensor 3 and outputs this as an output signal. The A/D conversion circuit 42 converts an analog signal, which is an input signal, to a digital signal, and outputs this as an output signal. The correction circuit 43 corrects unevenness in the input signal based on the characteristics of each imaging element of the sensor 3 that have been stored. The correction circuit 43 further calculates the amplification ratio of the amplifier 41 to make corrections, based on the brightness of the pixels corresponding to the fluorescent reference member 7 in the image received from the sensor 3, and the value of the predetermined brightness. That is, the correction circuit 43 makes corrections in a manner such that the brightness of the pixels of the image received from the sensor 3 that correspond to the fluorescence producing member 7-1 of the fluorescent reference member 7 reaches the predetermined brightness value.

As illustrated in FIG. 8, the controller 5 includes an image memory 51, a determination reference memory 52, and a control circuit 53.

The image memory 51 accumulates and stores images read by the image reading device 1. The determination reference memory 52 stores reference images that are used as reference in determination of paper sheets 8, in accordance with types of paper sheets. The control circuit 53 performs total control over the sensor 3, image acquisition unit 4, and image processing unit 6. The control circuit 53 controls the timing at which an image of the imaging range is taken by the sensor 3, turns the correction operation on and off, and controls the transmittance of the transmittance control element.

As illustrated in FIG. 8, the image processing unit 6 includes a position/skew detection unit 61, a position/skew correction unit 62, an image characteristic amount calculation unit 63, and a determination unit 64.

Under the control of the controller 5, the position/skew detection unit 61 detects the displacement and skew of the transported paper sheet 8 based on the images received from the image acquisition unit 4, or in other words, the images acquired by the sequential taking of the images of the imaging range to which the paper sheet 8 is transported by the sensor 3.

The position/skew correction unit 62 corrects the position and skew of the image in accordance with the displacement and skew of the paper sheet 8 detected by the position/skew detection unit 61. That is, the position/skew correction unit 62 makes corrections in a manner such that the longer sides of the paper sheet 8 are horizontally placed in the image. Alternatively, the position/skew correction unit 62 may make corrections in a manner such that the shorter sides of the paper sheet 8 are vertically placed.

The image characteristic amount calculation unit 63 compares the skew-corrected image with the corresponding one of the reference images of paper sheets stored in the determination reference memory 52, and detects, for example, whether predetermined fluorescence information is printed on the paper sheet 8 in the image. That is, the image characteristic amount calculation unit 63 determines that the region of the paper sheet 8 that corresponds to pixels having a brightness level lower than the pixels of the reference image does not include predetermined fluorescence printing.

The determination unit 64 makes final determination on the presence/absence of fluorescence printing by comparing the characteristic amount obtained by the image characteristic amount calculation unit 63 with the determination reference amount stored in the determination reference memory 52.

The processing after the acquisition of the image may vary in accordance with the detection result of the paper sheet 8 conducted by the image reading device 1, and thus is not limited to the above.

The paper sheet processing device including the above described image reading device 1 will be explained below.

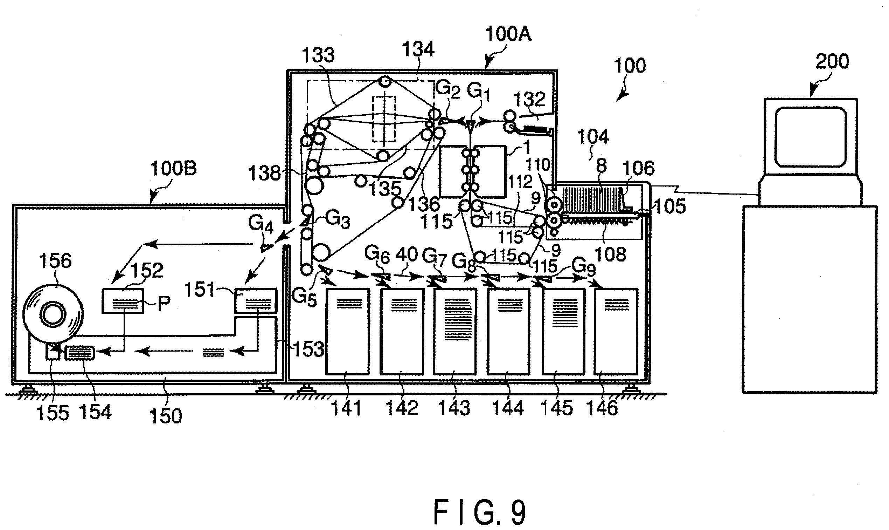

FIG. 9 shows a schematic configuration of a paper sheet processing device according to the first embodiment.

This paper sheet processing device includes a paper sheet processing device main body 100 and a control device 200 for operating and controlling the paper sheet processing device main body 100. The paper sheet processing device main body 100 controlled by the control device 200 may include one device or a plurality of devices. The paper sheet processing device main body 100 includes a sorting and accumulating device 100A that sorts banknotes 8, which are paper sheets, by denomination and validity and accumulates the sorted banknotes 8 by type, and a binder 100B that binds predetermined numbers of banknotes 8 bearing the same denomination into bundles. The paper sheet processing device main body 100 is configured in a manner such that one sorting and accumulating device 100A can be coupled to any number of binders 100B.

Banknotes 8 of different types are loaded together into the sorting and accumulating device 100A. The sorting and accumulating device 100A sorts the loaded banknotes 8 in accordance with types. The sorting and accumulating device 100A transports the sorted banknotes 8 to respective storage areas or to the binder 100B. The binder 100B accumulates the banknotes 8 supplied from the sorting and accumulating device 100A into the storage areas, and makes bundles of each predetermined number with a paper band.

The control device 200 is configured to control the paper sheet processing device main body 100, establish the settings for the paper sheet processing device main body 100, and manage the data processed by the paper sheet processing device main body 100. The control device 200 may be constituted by a personal computer. The control device 200 includes a display unit, an operation unit, a memory unit and the like.

Next, the internal configuration of the paper sheet processing device main body 100 will be explained.

As illustrated in FIG. 9, the paper sheet processing device main body 100 is constituted by the sorting and accumulating device 100A and the binder 100B. The sorting and accumulating device 100A has a feeder 104 through which banknotes 8 are loaded. To this feeder 104, banknotes 8 of different types are loaded together. The banknotes 8 loaded through the feeder 104 have a longitudinal direction and width direction. Each banknote 8 is loaded onto the feeder 104 with either the top edge or bottom edge of the longitudinal direction oriented downward.

The feeder 104 has a stage 105, a backing plate 106, and feed rollers 110 that collectively serve as a feeder. Onto the stage 105, banknotes 8 are loaded in an aligned manner with their top edges or bottom edges brought into contact with the stage 105. The backing plate 106 is arranged upright with respect to the stage 105. The backing plate 106 moves along the stage 105 by way of a spring 108 toward the feed rollers 110 side (to the left in the drawing). The feed rollers 110 are a pair of rollers. The feed rollers 110 rotate in a predetermined direction so as to sequentially feed the leftmost banknote 8 in the drawing, on the stage 105. In other words, the feed rollers 110 function as a feeding means. The banknotes 8 loaded onto the feeder 104 are thereby moved to the left in the drawing along the stage 105 by the backing plate 106, and pushed toward the feed rollers 110 (feeder).

A transport path 112 is provided downstream of the feed rollers. The transport path 112 is constituted by multiple rollers 115 and a conveyor 9. On the transport path 112, the banknotes 8 are transported by the conveyor 9 that is driven by the rollers 115. The banknotes 8 are sequentially sent to the transport path 112 fed by the feed rollers 110. The feed rollers 110 may send the banknotes 8 to the transport path 112, laid in the width direction with their top edge or bottom edge as the leading end. The banknotes 8 sent to the transport path 112 by the feed rollers 110 are placed with either the front side facing upwards or the rear side facing upwards. In the structure illustrated in FIG. 9, the banknotes 8 fed by the feeder 104 are oriented downward.

The image reading device 1 illustrated in FIG. 1 or 8 is provided on the transport path 112. As described above, the image reading device 1 reads the image of the banknote 8 and detects the skew of the banknote 8.

The banknotes 8 are loaded in non-uniform orientations with respect to the front and rear sides and upper and bottom edges onto the feeder 104 of the sorting and accumulating device 100A illustrated in FIG. 9. The banknotes 8 passing the image reading device 1 are still in non-uniform front/rear and upper/lower orientations. Four orientations can be considered with regard to the front/rear sides and upper/lower edges of the banknotes 8 passing the image reading device 1.

In the following explanation, a banknote 8 fed in an orientation with the front side upwards and the top edge first with respect to the transporting direction will be referred to as a "face-up top-first (FF)" note, and a banknote 8 fed in an orientation with the front side up and the bottom edge first with respect to the transporting direction will be referred to as a "face-up bottom-first" (FR) note. A banknote 8 fed in an orientation with the rear side up and the top edge first with respect to the transporting direction will be referred to as a "rear-up top-first" (BF) note, and a banknote 8 fed in an orientation with the rear side up and the bottom edge first with respect to the transporting direction will be referred to as a "rear-up bottom-first" (BR) note. The banknotes 8 being transported so as to pass the image reading device 1 will be placed in one of these four transporting orientations.

The image reading device 1 determines the orientation of the banknote 8 being transported on the transport path 112 from an image that has been read. The image reading device 1 also determines whether subsequent processing can be performed on the banknote 8 being transported on the transport path 112, from the image that has been read.

On the transport path 112 that extends downstream of the image reading device 1, gates G1 to G9 are provided to selectively switch the transporting directions of the banknotes 8 based on the processing result of the image reading device 1. First, at the gate G1, the banknotes 8 are sorted into those that can be subjected to the downstream processing and those that need to be rejected. For instance, the banknote 8 that the image reading device 1 determines should not be subjected to the downstream processing is transported to a reject box 132 (to the right in the drawing) through the gate G1. Banknotes that cannot be subjected to the downstream processing include two banknotes determined as being stuck together, a banknote determined as being skewed to a degree exceeding a predetermined degree, and a banknote that is not determined as a normal note and can be re-circulated, such as a damaged note or counterfeit note (or may not even be a banknote). The reject box 132 is accessible from outside the paper sheet processing device main body 100. In other words, the banknotes 8 accumulated in the reject box 132 can be removed by the operator.

In contrast, the banknote 8 determined by the image reading device 1 to be subjected to the downstream processing is transported to the gate G2 (to the left in the drawing) through the gate G1. At the gate G2, the banknotes 8 are sorted in accordance with the front-side and rear-side orientations. The transport path on the side downstream of the gate G2 is branched into two directions. That is, the gate G2 selectively switches the transporting directions of the banknotes 8 between two directions.

A front/rear reversing mechanism 134 (front/rear reversing unit) is provided on one branch of the transport path downstream of the gate G2 to turn over a banknote 8. A transport path 136, which is the other branch downstream of the gate G2, is simply to pass the banknote 8 without changing the front/rear side of the banknote 8. In other words, the banknotes 8 are brought into the uniform front/rear orientation after the gate G2.

The front/rear reversing mechanism 134 is constituted by two pairs of transport belts 133 and 135. The transport belts 133 and 135 are formed into a transport path extending from a start point to an end which is twisted 180 degrees around the center axis. A banknote 8 sorted by the gate G2 to the front/rear reversing mechanism 134 is thereby turned over. For instance, a FF note may be turned over by the front/rear reversing mechanism 134 to become a BF note, with the rear side up.

The banknotes 8 that have passed the front/rear reversing mechanism 134 and been turned over and the banknotes 8 that have passed the transport path 136 without passing the front/rear reversing mechanism 134 are both sent to the gate G3 by way of a merging unit 138.

The processing time (transporting time) of the banknotes 8 from the gate G2 to the merging unit 138 via the front/rear reversing mechanism 134 and the transporting time of the banknotes 8 from the gate G2 to the merging unit 138 via the transport path 136 are set to be equal. In this manner, a banknote 8 transported via the front/rear reversing mechanism 134 and a banknote 8 passing the transport path 136 pass the merging unit 138 at the same timing. As a result, all the banknotes 8 are sent to the gate G3 with the uniform BF-note orientation.

At the gate G3, the banknotes 8 that have passed the merging unit 138 are sorted. The transport path downstream of the gate G3 is branched into two directions. The gate G3 selectively switches the transporting directions of the banknotes 8 between two directions in accordance with types (or states) of the banknotes 8.

One branch of the transport path downstream of the gate G3 is designed to transport the banknotes 8 to the binder 100B. The other branch of the transport path (horizontal transport path) 140 branched downstream of the gate G3 is designed to accumulate the banknotes 8 in respective storage areas 141 to 146 of the sorting and accumulating device 100A. This branch is formed into a transport path horizontally extending above the storage areas 141 to 146. Above the horizontal transport path 140, five gates G5 to G9 are provided so that the banknotes 8 may be sorted and accumulated into one of the six storage areas 141 to 146. The storage areas 141 to 146 are designed to accumulate the transported banknotes. A sensor is provided in each of the storage areas 141 to 146 to detect the presence/absence of banknotes.

The storage areas 141 to 146 store the paper sheets processed by the device after sorting them by denominations. The controller 5 controls the gates G5 to G9 in a manner such that the paper sheets 8 are accumulated into the storage areas corresponding to the denomination types of the paper sheets 8 determined by the image characteristic amount calculation unit 63. That is, the controller 5 functions as a controlling means.

The banknotes 8 selectively sorted at the uppermost gate G5 on the horizontal transport path 140 are accumulated into the storage area 141. The banknotes 8 selectively sorted at the gate G6 are accumulated into the storage area 142. The banknotes 8 selectively sorted at the gate G7 are accumulated into the storage area 143. The banknotes 8 selectively sorted at the gate G8 are accumulated into the storage area 144. The banknotes 8 selectively sorted at the gate G9 are accumulated into the storage area 145 or storage area 146.

As illustrated in FIG. 9, the binder 100B includes a storage area 151, a storage area 152, a feeder 153, a bundling mechanism 154, a printing mechanism 155, and a band feeder 156. The storage areas 151 and 152 respectively store the banknotes 8 sent via the gate G4. A sensor is provided in each of the storage areas 151 and 152 to detect the presence/absence of banknotes.

The feeder 153 feeds a predetermined number (e.g., one hundred) of banknotes 8 accumulated in the storage area 151 or 152 to the bundling mechanism 154. The bundling mechanism 154 bundles the predetermined number (e.g., one hundred) of banknotes 8 accumulated in the storage area 151 or 152 and fed by the feeder 153, with a paper band. The printing mechanism 155 prints desired print data on the paper band used by the bundling mechanism 154. The band feeder 156 feeds paper bands to be used by the bundling mechanism 154.

The banknotes 8 are sent to the binder 100B through the transport path branched to the left in the drawing by the gate G3 of the sorting and accumulating device 100A. For the banknotes 8 sent by the sorting and accumulating device 100A, the transporting direction is selectively switched between two directions by the gate G4 in the binder 100B. The banknotes 8 transported in a branched manner by the gate G4 are selectively accumulated in the storage area 151 or the storage area 152 of the binder 100B.

The banknotes 8 accumulated in the storage area 151 or 152 by way of the gate G4 are fed to the bundling mechanism 154 by the feeder 153. The bundling mechanism 154 bundles a predetermined number of banknotes 8 fed by the feeder 153, with a paper band fed by the band feeder 156. Bundles of banknotes 8 bundled for every predetermined number are transported out of the device via a conveyor that is not shown in the drawing.

The sorting and accumulating device 100A is configured to feed band notes of a certain denomination to the binder 100B. The binder 100B is therefore configured to bundle banknotes of the certain denomination fed by the sorting and accumulating device 100A. The banknotes 8 of denominations other than the denomination to be bundled by the binder 100B are accumulated in one of the storage areas 141 to 146 in the sorting and accumulating device 100A.

With the above configuration, a paper sheet processing device configured to detect skew in a paper sheet and reliably read an image of the paper sheet can be provided.

In the above first embodiment, the image reading device 1 has been explained as a device including a controller 5 and an image processing unit 6, but is not limited thereto. For example, the controller 5 and the image processing unit 6 may be included in the paper sheet processing device main body 100 or in the control device 200.

Further operative effects of the first embodiment will be discussed below.

When a fluorescent image is corrected using white light and a background plate (white reference), it is assumed that the white light is provided together with the background plate. This will not pose any problem in the case that the system has a single unit configured to take both regular visible light images and fluorescent images. If, however, the system is meant for taking only fluorescent images, an additional lighting member specific to correction making needs to be provided.

Furthermore, in a system for taking visible light images, in consideration of the fact the information to be acquired by the camera is the light reflected from a target, the reference should be determined assuming that the maximum reflectance of the light illuminating the imaging target is basically 100% of the light. On the other hand, in fluorescent imaging, the intensity of fluorescent emission from the imaging target may significantly vary depending on the target even if the intensity of the excitation light is maintained constant. Furthermore, even under the same lighting, the sensitivity of the camera requires changing in accordance with the imaging target, and therefore it is preferable that the amount of emission from the reference medium be adjustable in accordance with the imaging target.

According to the first embodiment, a paper sheet processing device and paper sheet processing method that can facilitate the sensitivity correction of the sensor in accordance with the amount of emission from an imaging target can be provided. Through the use of a reference member that emits multicolor fluorescent lights, color fluorescent image correction can be realized with excitation light intended for fluorescent imaging, and the adjustment of the range of the camera sensitivity can be facilitated by the arrangement of an element for controlling the transmittance on the reference medium.

According to a second embodiment, a fluorescent image calibration method (which may also be referred to as a " fluorescent image correcting method") comprises transporting a proof sheet coated with two or more fluorescent materials having different rise times of fluorescent emission, applying excitation light to the proof sheet, and obtaining a proof sheet image signal corresponding to an image of the proof sheet, obtaining proof sheet measurement data indicating emission light intensities of the two or more fluorescent materials from the proof sheet image signal, and setting a correction value to correct a paper sheet image signal corresponding to an image of a paper sheet, based on a relationship of paper sheet reference data, proof sheet reference data and the proof sheet measurement data, wherein the paper sheet reference data indicates a relationship between a rise time of each of the fluorescent materials of the paper sheet on which a fluorescent image is included and an emission light intensity, and the proof sheet reference data indicates a relationship between a rise time of each of the two or more fluorescent materials on the proof sheet and the emission light intensity.

The second embodiment will be explained below with reference to the drawings. In the explanation of the second embodiment, the description of the same components as in the first embodiment will be omitted as needed.

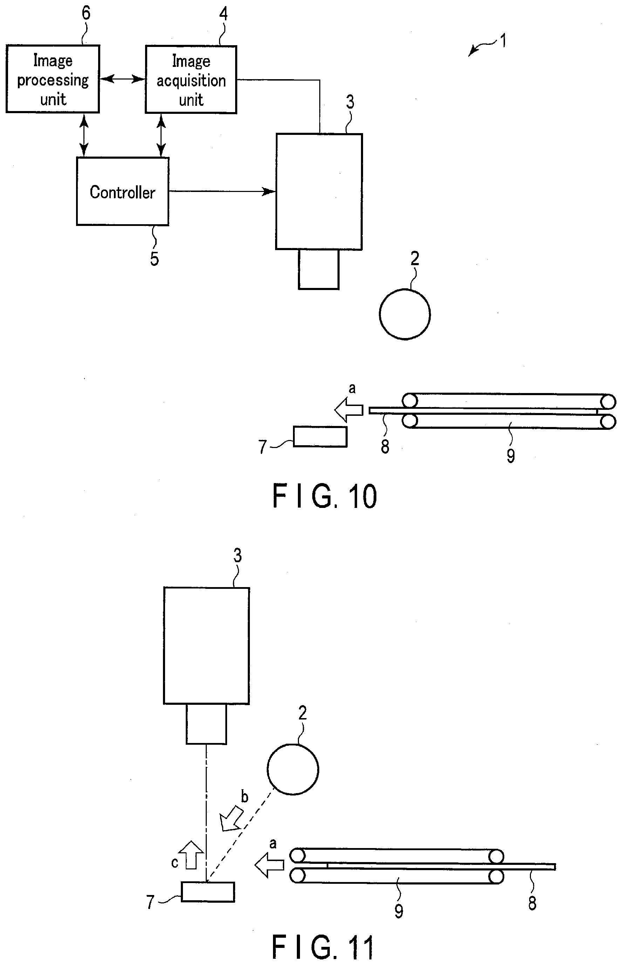

FIG. 10 is a schematic diagram showing an image reading device 1 according to the second embodiment. As illustrated in FIG. 10, the image reading device 1 includes a light source 2, a sensor 3, an image acquisition unit 4, a controller 5, an image processing unit 6, a fluorescent reference member 7, and a conveyor 9 that functions as a transporting means. The fluorescent reference member 7 is prepared by coating the surface of a quartz glass panel with a fluorescent ink and is configured to produce fluorescence of an intensity corresponding to the intensity of the applied excitation light.

The controller 5 may include a processor such as a CPU, a memory, and an interface. For instance, the CPU is a processor that realizes, through implementation of a program, the setting of a correction value for correcting a fluorescent image and the correction processing based on the correction value.

The image reading device 1 according to the second embodiment is basically the same as the image reading device 1 according to the first embodiment, except for the fluorescent reference member 7.

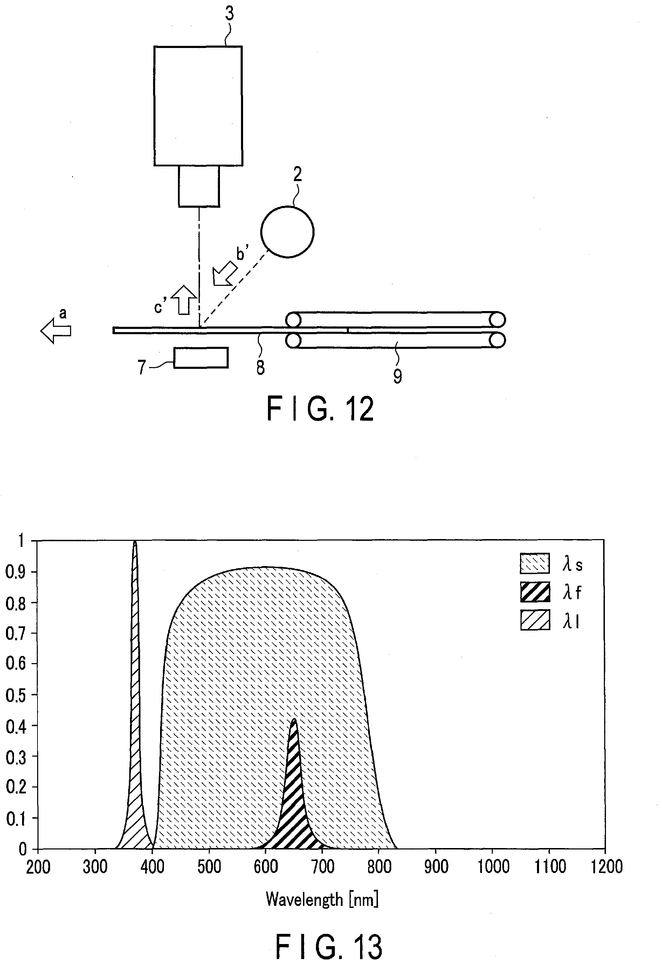

The flow of fluorescent imaging will be explained with reference to FIGS. 11 and 12.

When a paper sheet 8 is not within the imaging range, or in other words when the paper sheet 8 is not placed at a position facing the sensor 3 (position facing the fluorescent reference member 7), the light source 2 irradiates the fluorescent reference member 7 with excitation light b. The applied excitation light b excites the fluorescent reference member 7, producing fluorescent light c. The sensor 3 receives the fluorescent light c produced in the imaging range. That is, the sensor 3 acquires an imaging signal corresponding to the fluorescent light c.

Next, under the control of the controller 5, the conveyor 9 transports the paper sheet 8 toward the imaging range of the sensor 3. At the same time, the light source 2 irradiates the imaging range to which the paper sheet 8 is being transported with excitation light b'. The applied excitation light b' excites the fluorescent ink used for printing on the paper sheet 8, producing fluorescent light c'. The sensor 3 receives the fluorescent light c' produced in the imaging range. That is, the sensor 3 acquires an imaging signal corresponding to the fluorescent light c'. In this manner, the image reading device 1 can acquire a fluorescent image of the paper sheet 8. The fluorescent light c provides information indicating the states of lighting output and the camera sensitivity immediately before the passage of the paper sheet 8, allowing for the image to be corrected based on this information. As a result, an image can be acquired under stable conditions.

An exemplary relationship of the irradiation wavelength λl of the light source 2, the sensitivity wavelengths (multiple sensitivity wavelengths) λR, λG and λB of the sensor 3, the emission wavelength λa of the fluorescent reference member 7, and the fluorescent emission wavelength λf of the paper sheet 8 is the same as that illustrated in FIG. 4, and the detailed explanation is therefore omitted. If a monochrome image is output without differentiating RGB, the setting of the sensor 3 may be established in a manner such that the sensitivity wavelength λs of the monochrome image covers the emission wavelength λa and the sensitivity wavelength λf, as illustrated in FIG. 13.

The arrangement of the fluorescent reference member 7 and the transport path of the paper sheet 8 is the same as that illustrated in FIG. 5, and thus the detailed explanation is omitted. An exemplary image read by the image reading device 1 is the same as that illustrated in FIG. 6, and thus the detailed explanation is omitted.

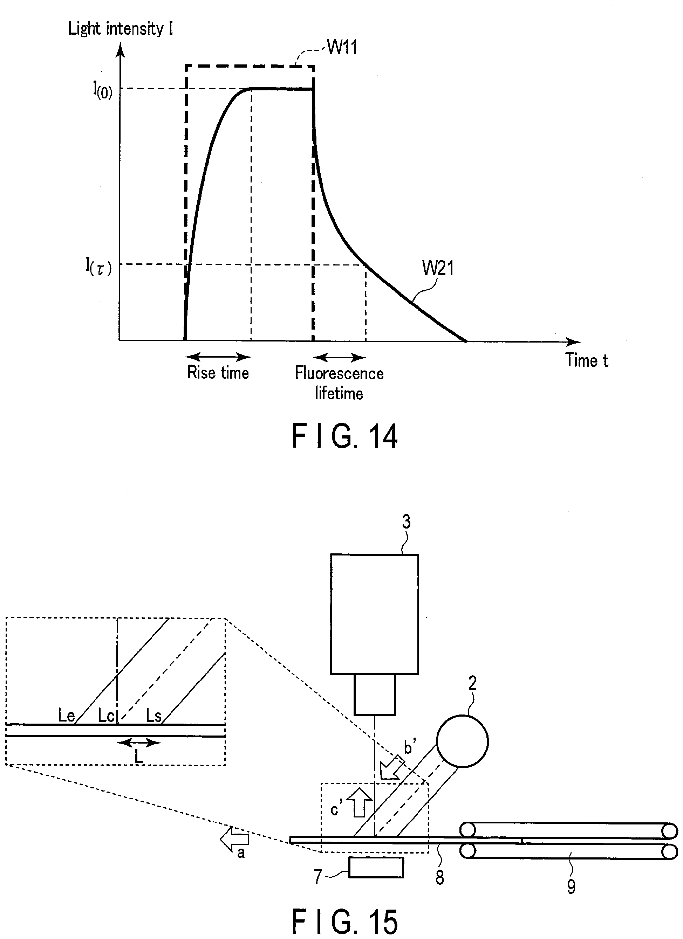

Next, the excitation of the fluorescent material and the fluorescent time property will be briefly discussed. FIG. 14 is a schematic diagram showing an exemplary relationship between the excitation light emission from the image reading device according to the second embodiment and the emission of the fluorescent material.

As illustrated in FIG. 14, upon receipt of the excitation light emission corresponding to an excitation lighting waveform W11, the fluorescent material produces fluorescence having a fluorescent waveform W21. Time is required for the fluorescent material to demonstrate a stabilized intensity of fluorescence after the commencement of fluorescent emission. The length of time from the start of fluorescent emission to the intensity of the fluorescent emission being stabilized will be referred to as "rise time". Time is also required for the fluorescent light of the fluorescent material to decay (afterglow) after the irradiation of the excitation light is ceased, reducing the intensity of the fluorescent emission. The length of time that it takes for the fluorescent emission to be weakened to a specific rate is referred to as "lifetime of fluorescence". Such a length of time is determined by the composition of the fluorescent material.

The lifetime of fluorescence is defined as follows:

$$\tau = 1/(Rr+Rn)$$

τ: lifetime of fluorescence
Rr: radiation shift rate
Rn: non-radiation shift rate

In general, the fluorescence intensity I(t) after time t passes after the obstruction of the excitation light can be expressed as:

$$I(t) = I(0)\exp[\text{-}t/\tau]$$

I(0): fluorescence intensity at the time of excitation light emission

In view of the above, image corrections are conducted in consideration of a delay in the change of the fluorescence of the fluorescent reference member 7 with respect to the change of the light source 2.

Next, the factors of variation in the sensitivity of the correction target will be explained.

FIG. 15 is a schematic diagram showing an example of the irradiation by the image reading device according to the second embodiment and the excitation zone. As illustrated in FIG. 15, the excitation light b of FIGS. 11 and 12 is actually irradiated with a certain width. A fluorescent image taken by the sensor 3 is based on the emission amount of light excited in a zone L, which spans a position Ls where the excitation light b starts falling upon the paper sheet and a sensor field position Lc.

The excitation time T for exciting the fluorescent material can be obtained from the following equation when V is the transport velocity of a paper sheet.

$$T=L/V$$

The factors of variation will be explained from the relationship of the excitation light irradiation, the emission of the fluorescent material, and the time T illustrated in FIG. 14. For the sake of simplicity, it is assumed here that the zone L is uniformly irradiated, and the width of the field of view of the camera is negligibly smaller than the irradiation range.

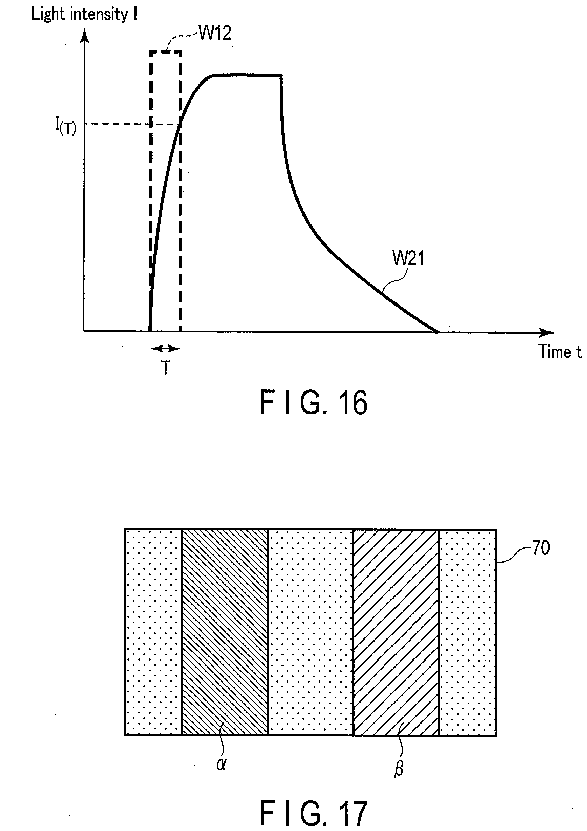

In the example of FIG. 14, the excitation lighting time T is longer than the rise time. However, in the event that the excitation lighting waveform W12 and the fluorescent waveform W21 have a relationship as illustrated in FIG. 16, or in other words, if the rise time of the fluorescent material is longer or if the transport velocity V is higher, the timing of taking a fluorescent image may fall in the middle of the rise time. Here, the time T varies due to the variation in the position Lc caused by an error in the assembly of the camera to the device main body, or in the position Ls caused by the arrangement of the lighting or individual differences in light distribution. As a result, the signal I(T) of the light intensity, which is acquired as a fluorescent image, varies from device to device.

Image corrections for mitigating the influence of such variations will be explained below.

FIG. 17 shows an exemplary proof sheet prepared by printing with two types of fluorescent ink on a paper sheet. According to the second embodiment, a proof sheet 70 is prepared by coating the paper with two fluorescent materials $\alpha$ and $\beta$ (first and second fluorescent materials), for which the rise time has been measured in advance. The proof sheet may be two different sheets onto which two respective fluorescent materials are printed, or a single paper sheet on which two inks may be used for printing as illustrated in FIG. 17. In the second embodiment, a proof sheet 70 coated with two fluorescent materials $\alpha$ and $\beta$ having different rise times of fluorescent emission will be explained as an example, but the proof sheet may include three or more fluorescent materials having different rise times of fluorescent emission.

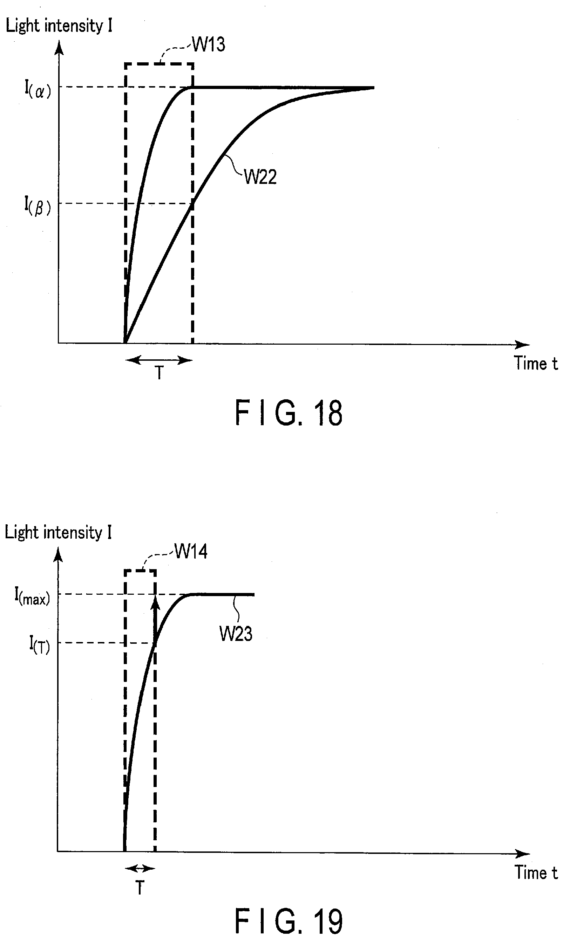

FIG. 18 is a schematic diagram showing an exemplary relationship of the rise times of the fluorescent materials on the proof sheet measured by the image reading device according to the second embodiment, the imaged signals 1, and time T.

When the relationship between the excitation lighting waveform W13 and the fluorescent waveform W22 as illustrated in FIG. 18 is established, the light intensity of the fluorescent material $\alpha$ acquired by the target image reading device 1 is represented as I($\alpha$), and the light intensity of the fluorescent material $\beta$ is represented as I($\beta$) when the proof sheet 70 is imaged while being transported. The excitation time T can be obtained from the relationship between the light intensities I($\alpha$) and I($\beta$). For the sake of simplicity, it is assumed that the light intensities I($\alpha$) and I($\beta$) take the same the convergence value.

The fluorescent emission amount of the fluorescent material $\alpha$ should reach a stabilization point during the excitation lighting time period, while the emission amount of the fluorescent material $\beta$ should be yet to stabilize during the excitation lighting time period. For instance, when the irradiation range of the excitation light before the field of view of the sensor is 5mm and the transport velocity V is 1 to 10 m/sec, the excitation time (rise time) of the fluorescent material $\alpha$ should be 0.5 to 5 msec, and the excitation time (rise time) of the fluorescent material $\beta$ should be doubled, approximately 1 to 10 msec.

FIG. 19 is a schematic diagram showing an exemplary correction amount of a fluorescent image signal of an imaging target by the image reading device according to the second embodiment.

A situation in which the relationship between the excitation lighting waveform W14 and the fluorescent waveform W23 is established as illustrated in FIG. 19 is considered. The controller 5 acquires the excitation time through the imaging of the proof sheet 70; and from the excitation time T, the controller 5 acquires the correction amount of the fluorescent image signal of the imaging target. For instance, the controller 5 acquires the excitation time T based on the preset transport velocity V and the zone L, and acquires the correction value of the fluorescent image signal of the paper sheet, which is the imaging target, based on the excitation time T. The image acquisition unit 4 stores the correction value in a correction circuit or the like. The image processing unit 6 corrects the fluorescent image signal based on the correction value. For instance, the data of the rise time of the target fluorescent material is measured in advance, the intensity ratio I(max)/I(T) of the convergence value I(max) of the intensity of fluorescent emission to an excitation time is stored in the memory as a correction value (in a correction table), and the correction value stored in the memory is set to the correction circuit at a predetermined timing.

By multiplying the target fluorescent image signal (information 81 in FIG. 6) of a paper sheet by the correction value, a fluorescent image signal at the time of convergence can be acquired, without being affected by the variance in excitation time T among different image reading devices 1.

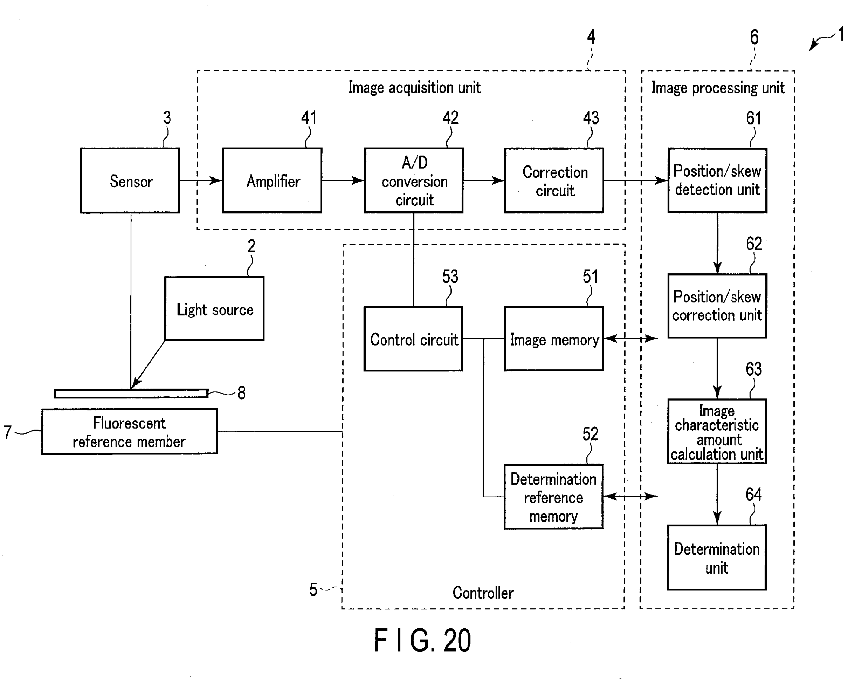

FIG. 20 is a block diagram showing an exemplary structure of the image reading device according to the second embodiment having various components, where the functions of the image acquisition unit 4, the controller 5, and the image processing unit 6 of FIG. 10 are indicated as blocks. In the explanation of the components of the image reading device according to the second embodiment, the description of the same components as in the image reading device according to the first embodiment of FIG. 8 will be omitted as necessary.

The image memory 51 accumulates and stores images read by the image reading device 1. The determination reference memory 52 stores reference images for respective types of paper sheets in advance, which serve as references in the determination of a type of paper sheet 8. The determination reference memory 52 further stores correction values (correction parameters) for correcting the reference image of the paper sheet used when determining the type of the paper sheet 8. The control circuit 53 performs overall control on the components of the sensor 3, image acquisition unit 4, and image processing unit 6 so that the transportation of the proof sheet 70 and paper sheet 8, the irradiation of the excitation light, imaging of the proof sheet 70 and paper sheet 8, acquisition of various kinds of data, setting of the correction value, and correction based on the correction value can be implemented. The control circuit 53 is constituted by one or more processors and a memory, where the processor is operated based on a program stored in the memory to perform the above control.

The setting of a correction value for correction of a fluorescent image by the image reading device 1 according to the second embodiment, and the correction processing based on the correction value, will be explained. The image reading device 1 may be incorporated into the paper sheet processing device. If this is the case, the setting of a correction value and the correction processing are performed by the image reading device 1 and the paper sheet processing device in cooperation. The paper sheet processing device will be described in detail later.

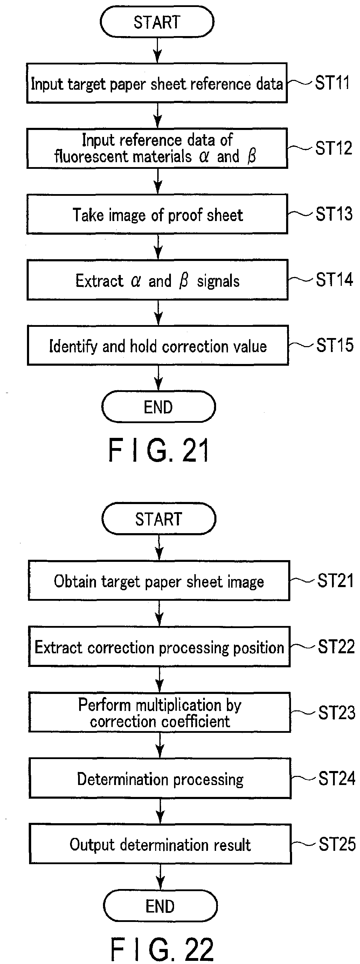

FIG. 21 is a flowchart of the setting of a correction value or, what is called "calibration operation", in the fluorescent image correction processing by the image reading device according to the second embodiment.

The measurement device for acquiring various kinds of reference data measures in advance the rise time of the fluorescent image (fluorescent material) printed on the targeted paper sheet, which is an imaging target, and acquires paper sheet reference data that represents the relationship between the rise time and the amount of emission. The acquired paper sheet reference data is input to the image reading device 1, and the determination reference memory 52 of the controller 5 stores the paper sheet reference data that is input thereto (ST11). As illustrated in FIG. 20, the determination reference memory 52 may store a correction table, which includes correction values obtained from the paper sheet reference data. A correction value in the correction table may correspond to the excitation time, and the value represents the intensity ratio I(max)/I(T) for the convergence value I(max) of the fluorescent light intensity.

The measurement device for acquiring various kinds of reference data further measures the rise times of a proof sheet to which two or more fluorescent materials having different rise times of fluorescent emission are applied, such as the rise times of the fluorescent materials $\alpha$ and $\beta$ on the proof sheet 70, and acquires the proof sheet reference data indicating the relationship between the rise time and the amount of emission. The acquired proof sheet reference data is input to the image reading device 1, and the determination reference memory 52 of the controller 5 stores the proof sheet reference data input thereto (ST12).

The proof sheet reference data stored in the determination reference memory 52 includes first positional information indicating the positions of the fluorescent materials $\alpha$ and $\beta$ printed on the proof sheet 70. The paper sheet reference data stored in the determination reference memory 52 further includes second positional information indicating the position of a fluorescent image printed on the paper sheet. The first positional information is obtained by measuring the positions of the fluorescent materials $\alpha$ and $\beta$ printed on the proof sheet 70. The second positional information is obtained by measuring the position of a fluorescent image printed on the paper sheet.

As illustrated in FIG. 9, the paper sheet processing device is constituted by the paper sheet processing device main body 100 and the control device 200 such as a general-use computer. This control device 200 may be configured to control the entire operations of acquiring and inputting the paper sheet reference data and acquiring and inputting the proof sheet reference data. The control device 200 may acquire the paper sheet reference data via a network, and input or transfer the acquired paper sheet reference data to the image reading device 1, so that the determination reference memory 52 of the controller 5 in the image reading device 1 can store the paper sheet reference data input thereto (ST11). In a similar manner, the control device of the paper sheet processing device acquires the proof sheet reference data via the network, and inputs or transfers the acquired proof sheet reference data to the image reading device 1, so that the determination reference memory 52 of the controller 5 in the image processing device 1 can store the proof sheet reference data input thereto (ST12).

Thereafter, the image reading device 1 takes an image of the proof sheet 70, thereby obtaining a proof sheet image (ST13). The controller 5 may perform control in a manner such that the proof sheet 70 is transported at the transport velocity V, and may also perform control of the excitation light irradiation of the light source 2. As a result, the proof sheet 70 is transported, the excitation light is applied to the proof sheet 70 by the light source 2, and the image acquisition unit 4 acquires a proof sheet image signal corresponding to a proof sheet image.

The controller 5 extracts, from the proof sheet image signal, $\alpha$ and $\beta$ signals (hereinafter, "proof sheet measurement data") corresponding to the portions of the fluorescent materials $\alpha$ and $\beta$ printed, based on the first positional information indicating the positions of the fluorescent materials $\alpha$ and $\beta$ printed on the proof sheet 70 (ST14).

Based on the relationship of the paper sheet reference data stored in the determination reference memory 52, the proof sheet reference data stored in the determination reference memory 52 and the proof sheet measurement data, the controller 5 selects a correction value from the correction table in the determination reference memory 52 to correct a paper sheet image, which is obtained by taking an image of a paper sheet, and sets a correction value in the correction circuit 43. That is, the controller 5 compares the proof sheet reference data with the proof sheet measurement data; estimates, from the relationship between the proof sheet reference data and proof sheet measurement data, the excitation time for which the excitation light is being applied to the proof sheet 70; and obtains excitation time that is estimated (hereinafter, "estimated excitation time"). That is, the controller 5 obtains the estimated excitation time from the relationship of the intensities of the extracted $\alpha$ and $\beta$ signals, based on the proof sheet reference data indicating the relationship between the rise times of the fluorescent materials $\alpha$ and $\beta$ on the proof sheet and the emission intensities. The controller 5 selects a correction value corresponding to the estimated excitation time, based on the correction table (correction values corresponding to the excitation times obtained from the paper sheet reference data) stored in the determination reference memory 52, and sets a correction value in the correction circuit 43 (ST15). The correction value corresponding to the excitation time obtained from the paper sheet reference data is the intensity ratio I(max)/I(T) of the convergence value I(max) of the fluorescent light intensity corresponding to the excitation time.

FIG. 22 is a flowchart showing an example of the fluorescent image correction operation and determination operation by the image reading device according to the second embodiment.

As illustrated in FIG. 22, the image reading device 1 takes an image of the paper sheet, and obtains the paper sheet image (ST21). The controller 5 may control the transport of the paper sheet at the target transport velocity V, and also control the excitation light emission from the light source 2. In this manner, the paper sheet is transported, excitation light is applied to the paper sheet from the light source 2, and the image acquisition unit 4 obtains a paper sheet image signal corresponding to the paper sheet.

The controller 5 controls the correction of the paper sheet image signal based on the correction value held at ST15. For example, the controller 5 may extract the correction processing position for the paper sheet image signal, based on the second positional information indicating the position of the fluorescent image printed on the paper sheet (ST22). The correction circuit 43 multiplies the image signal of the correction processing position by the correction value (ST23). That is, the image signal corresponding to the portion of the fluorescent material printed on the paper sheet is multiplied by the correction value so that the image signal corresponding to the portion of the fluorescent material printed on the paper sheet can be corrected.

The image processing unit 6 executes various kinds of image processing on the corrected paper sheet image signal, determines the quality or state of the paper sheet based on the corrected paper sheet image signal (ST24), and outputs the determination result (ST25). The determination unit 64 may determine, based on the corrected paper sheet image signal, whether or not the amount of fluorescent emission from the fluorescent material of the paper sheet is appropriate. The determination unit 64 may further determine, based on the corrected paper sheet image signal, whether or not the paper sheet is properly printed, or is soiled or damaged.

According to the above second embodiment, the image reading device 1 configured to correct a fluorescent image affected by variation in the excitation time of fluorescent materials caused by assembly errors of the device and variation in the production of the components, as well as the fluorescent image calibration method implemented by this image reading device 1, can be provided. That is, the image reading device 1 corrects the image of the paper sheet, based on the correction value corresponding to the estimated excitation time obtained from imaging of the proof sheet 70.

A paper sheet processing device having the image reading device 1 according to the second embodiment is the same as that illustrated in FIG. 9, and thus the detailed explanation is omitted.

With the above configuration, a paper sheet processing device that can detect the skew of the paper sheet and correct its orientation with a fluorescent image only, correct the differences in excitation time among individual devices, and thereby reliably read fluorescent images of the paper sheets, can be provided.

In the above second embodiment, the explanation is of an image reading device 1 having a controller 5 and an image processing unit 6; however, it is not limited thereto. For instance, the controller 5 and image processing unit 6 may be included in the paper sheet processing device main body 100 or control device 200. If the controller 5 is included in the control device 200, the control device 200 can realize the setting of a correction value shown in FIG. 21. In the case of a single control device 200 controlling a plurality of paper sheet processing devices, the control device 200 may be configured to receive image signals imaged by the paper sheet processing devices, detect variations in the excitation time on the paper sheet processing device, based on image signals from the respective paper sheet processing devices, and set a correction value to correct the image signal affected by the variation in excitation time on individual paper sheet processing devices.

The operational effects of the second embodiment are discussed below.

Fluorescent materials printed on a paper sheet have various excitation response times. An image obtainment technique in which an excitation response time is taken into account has been deemed desirable in order to accurately read the fluorescent emission amount of a paper sheet as an image. Specifically, when a material having a longer response time (i.e. taking a long time for the fluorescent emission amount to converge) is printed, the fluorescent emission amount may not converge within the irradiation range of the excitation light. If assembly errors or the like of the device disturbs the relationship between the irradiation range and the position of the camera (imaging field), the amount of emission from a fluorescent image differs. One possibility of a measure is to expand the irradiation range of the excitation light, but this will increase the size and costs of the device.

According to the above second embodiment, a paper sheet processing device configured to correct a fluorescent image affected by variation in the excitation time of fluorescent materials caused by assembly errors of the device and variation in production of the components, as well as the fluorescent image calibration method implemented by this paper sheet processing device, can be provided. The paper sheet processing device has the capability to transport paper sheets at high speed, in which the influence of variation in the fluorescent material excitation time caused by device assembly errors or component production variation is not negligible. With the fluorescent image calibration method according to the second embodiment, the accuracy of various determination operations for paper sheets can be improved. Furthermore, the fluorescent image calibration method according to the second embodiment is effective in checking, to a highly accurate degree, the printing quality of paper sheets printed with a highly sensitive printing technique, and in determining normal notes, damaged notes and counterfeit notes among paper sheets to a similarly accurate degree.

**Claims**

1. A fluorescent image calibration method comprising:

   transporting a proof sheet (70) coated with two or more fluorescent materials having different rise times of fluorescent emission, applying excitation light to the proof sheet (70), and obtaining (ST13) a proof sheet image signal corresponding to an image of the proof sheet (70);
   obtaining (ST14) proof sheet measurement data indicating emission light intensities of the two or more fluorescent materials from the proof sheet image signal;
   setting (ST15) a correction value to correct a paper sheet image signal corresponding to an image of a paper sheet, based on a relationship of paper sheet reference data, proof sheet reference data and the proof sheet measurement data, wherein the paper sheet reference data indicates a relationship between a rise time of each of the fluorescent materials of the paper sheet on which a fluorescent image is included and an emission light intensity, and the proof sheet reference data indicates a relationship between a rise time of each of the two or more fluorescent materials on the proof sheet (70) and the emission light intensity;

   obtaining an estimated excitation time for which the excitation light is being applied to the proof sheet (70), from the relationship between the proof sheet reference data and the proof sheet measurement data; and
   setting a correction value corresponding to the estimated excitation time, based on a correction value corresponding to an excitation time obtained from the paper sheet reference data.

2. The fluorescent image calibration method according to claim 1, wherein
   the correction value corresponding to the excitation time is an intensity ratio of a convergence value of a fluorescent emission light intensity corresponding to the excitation time.

3. The fluorescent image calibration method according to claim 1 or 2, wherein

   the proof sheet reference data includes first positional information indicating positions of the two or more fluorescent materials, and
   the fluorescent image calibration method further comprises obtaining the proof sheet measurement data indicating the emission light intensities of the two or more fluorescent materials from the proof sheet image signal, based on the first positional information.

4. The fluorescent image calibration method according to any one of claims 1 to 3, further comprising:

   transporting the paper sheet, applying the excitation light to the paper sheet, and obtaining the paper sheet image signal corresponding to the image of the paper sheet; and
   correcting the paper sheet image signal based on the correction value.

5. The fluorescent image calibration method according to claim 4, wherein

   the paper sheet reference data includes second positional information indicating a position of the fluorescent image of the paper sheet, and
   the fluorescent image calibration method further comprises correcting the paper sheet image signal based on the correction value and the second positional information.

6. The fluorescent image calibration method according to claim 4 or 5, further comprising:
   determining a quality or state of the paper sheet based on the paper sheet image signal corrected.

7. The fluorescent image calibration method according to any one of claims 1 to 6,

wherein the two or more fluorescent materials include at least first and second fluorescent materials, and one of the fluorescent materials has a rise time of double a length of a rise time of the other fluorescent material.

**FIG. 1**

**FIG. 2**

F I G. 3

F I G. 4

F I G. 5

F I G. 6

```
              ┌──────────┐
              │  START   │
              └──────────┘
                   │
                   │        ┌─ST1
                   ▼
        ┌──────────────────────┐
        │     Take image of     │
        │   target paper sheet  │
        └──────────────────────┘
                   │
                   │        ┌─ST2
                   ▼
              ╱─────────╲          NO
             ╱ La(MAX)    ╲───────────────┐
             ╲  < 255?    ╱                │
              ╲─────────╱                  │
                   │ YES      ┌─ST4        │        ┌─ST3
                   ▼                       ▼
        ┌──────────────────────┐   ┌──────────────────────┐
        │   Multiply sensor gain│   │   Lower sensor gain   │
        │    by α /La(MAX)      │   │  (e.g., multiplied by │
        │                       │   │        0.5)           │
        └──────────────────────┘   └──────────────────────┘
                   │                       │
                   │        ┌─ST5          │
                   ▼                       │
        ┌──────────────────────┐           │
        │  Take image of fluorescent│       │
        │   reference member    │           │
        └──────────────────────┘           │
                   │                       │
                   │        ┌─ST6          │
                   ▼                       │
              ╱─────────╲          NO      │
             ╱ Lb(MAX)    ╲──────────┐     │
             ╲  < 255?    ╱          │     │
              ╲─────────╱            │     │
                   │ YES   ┌─ST8     │  ┌─ST7
                   ▼                 ▼
        ┌──────────────────────┐   ┌──────────────────────┐
        │   Multiply transmittance│  │   Lower transmittance │
        │     by β /Lb(MAX)     │   │  (e.g., multiplied by │
        │                       │   │        0.5)           │
        └──────────────────────┘   └──────────────────────┘
                   │
                   ▼
              ┌──────────┐
              │   END    │
              └──────────┘
```

$La(MAX) < 255?$

Multiply sensor gain by $\alpha /La(MAX)$

Lower sensor gain (e.g., multiplied by 0.5)

Take image of fluorescent reference member

$Lb(MAX) < 255?$

Multiply transmittance by $\beta /Lb(MAX)$

Lower transmittance (e.g., multiplied by 0.5)

# F I G. 7

1

Image processing unit 6

61 Position/skew detection unit

62 Position/skew correction unit

63 Image characteristic amount calculation unit

64 Determination unit

Image acquisition unit 4

43 Correction circuit

42 A/D conversion circuit

41 Amplifier

Controller

51 Image memory

52 Determination reference memory

53 Control circuit

5

3 Sensor

2 Light source

8

Transmittance control element 7-2

Fluorescence producing member 7-1

7

F I G. 8

FIG. 9

F I G. 10

F I G. 11

F I G. 12

F I G. 13

Wavelength [nm]

λs
λf
λl

F I G. 14

F I G. 15

Light intensity I

W12

$I_{(T)}$

W21

T

Time t

F I G. 16

70

α          β

F I G. 17

Light intensity I

I(α) ┄┄┄┄┄┄┄┄┄┄┄┄┄┄┄┄┄

W13

I(β) ┄┄┄┄┄┄

W22

T

Time t

## F I G. 18

Light intensity I

I(max) ┄┄┄┄┄┄┄┄┄┄

W14

I(T) ┄┄┄┄┄┄

W23

T

Time t

## F I G. 19

F I G. 20

EP 3 982 341 A1

START

Input target paper sheet reference data ⟶ ST11

Input reference data of
fluorescent materials $\alpha$ and $\beta$ ⟶ ST12

Take image of proof sheet ⟶ ST13

Extract $\alpha$ and $\beta$ signals ⟶ ST14

Identify and hold correction value ⟶ ST15

END

F I G. 21

START

Obtain target paper sheet image ⟶ ST21

Extract correction processing position ⟶ ST22

Perform multiplication by
correction coefficient ⟶ ST23

Determination processing ⟶ ST24

Output determination result ⟶ ST25

END

F I G. 22

Europäisches
Patentamt

European
Patent Office

Office européen
des brevets

# EUROPEAN SEARCH REPORT

Application Number

EP 21 21 0254

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2015 222463 A (GLORY KOGYO KK) 10 December 2015 (2015-12-10) * figures 1A, 1B * ----- | 1-7 | INV. G07D7/12 G07D7/1205 G07D7/20 |
| X | JP 2011 118457 A (TOSHIBA CORP) 16 June 2011 (2011-06-16) * figures 1-7 * ----- | 1-7 | |

TECHNICAL FIELDS
SEARCHED      (IPC)

G07D

The present search report has been drawn up for all claims

| Place of search | Date of completion of the search | Examiner |
|---|---|---|
| The Hague | 1 March 2022 | Schikhof, Arnout |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 21 0254

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2022

| Patent document cited in search report | | Publication date | Patent family member(s) | | Publication date |
|---|---|---|---|---|---|
| JP 2015222463 | A | 10-12-2015 | CN | 106463010 A | 22-02-2017 |
| | | | EP | 3147873 A1 | 29-03-2017 |
| | | | JP | 6288709 B2 | 07-03-2018 |
| | | | JP | 2015222463 A | 10-12-2015 |
| | | | US | 2017153184 A1 | 01-06-2017 |
| | | | WO | 2015178384 A1 | 26-11-2015 |
| JP 2011118457 | A | 16-06-2011 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015222463 A

- JP 2011118457 A